# EUROPEAN PATENT SPECIFICATION

(11) **EP 4 497 257 B1**
(45) Date of publication and mention of the grant of the patent: **29.04.2026**
(21) Application number: 23709720.9
(22) Date of filing: 09.03.2023
(51) Int. Cl.: H04W 12/80, H04W 12/04, H04W 12/08, H04W 8/02

(54) **LAWFUL INTERCEPTION OF ACTIVITY OF AN APPLICATION FUNCTION**
RECHTMÄSSIGES ABFANGEN VON AKTIVITÄTEN EINER ANWENDUNGSFUNKTION
INTERCEPTION LÉGALE DE L'ACTIVITÉ D'UNE FONCTION D'APPLICATION

(30) Priority: 21.03.2022 EP 22305331
(43) Date of publication of application: 29.01.2025
(73) Proprietor: THALES DIS FRANCE SAS, 92190 Meudon (FR)
(72) Inventor: DANY, Vincent, 13705 LA CIOTAT (FR); PAULIAC, Mireille, 13705 LA CIOTAT (FR)
(74) Representative: Scheer, Luc
(86) International application number: PCT/EP2023/056062
(87) International publication number: WO 2023/180087

(56) References cited:
- SA3-LI (NDRE ET AL: "CR adding LI for AKMA (stage 2)", vol. SA WG3, no. e-meeting; 20210712 - 20210716, 16 July 2021 (2021-07-16), XP052031493, Retrieved from the Internet <URL:https://ftp.3gpp.org/tsg_sa/WG3_Security/TSGS3_LI/2021_82e-a/Docs/s3i210487.zip s3i210487.doc> [retrieved on 20210716]
- "3rd Generation Partnership Project; Technical Specification Group Services and System Aspects; Security; Lawful Interception (LI) architecture and functions (Release 17)", 16 December 2021 (2021-12-16), XP052088639, Retrieved from the Internet <URL:https://ftp.3gpp.org/tsg_sa/WG3_Security/TSGS3_LI/Specs-for-Review/draft-33127-h30.docx> [retrieved on 20211216]
- "3rd Generation Partnership Project; Technical Specification Group Services and System Aspects; Authentication and Key Management for Applications (AKMA) based on 3GPP credentials in the 5G System (5GS) (Release 17)", no. V17.4.0, 23 December 2021 (2021-12-23), pages 1 - 24, XP052083374, Retrieved from the Internet <URL:https://ftp.3gpp.org/Specs/archive/33_series/33.535/33535-h40.zip 33535-h40.docx> [retrieved on 20211223]

## Description

### FIELD OF THE INVENTION

The present invention relates to a method to enable lawful interception of activities of a user equipment, UE, with an application function, AF, associated to a bootstrapping technology.

The invention also pertains to a user equipment UE implementing this method and to a bootstrapping Anchor Function implementing this method.

### BACKGROUND OF THE INVENTION

Bootstrapping technologies enable keys to be shared between a user equipment UE and an application function AF. Such bootstrapping technologies are typically the Generic Bootstrapping Architecture GBA or Authentication and Key Management for Applications AKMA based on 3GPP credentials in the 5G System.

GBA has been defined in 4G, while AKMA has been specified in 5G Rel-17.

These technologies are gaining new applications with the development, among others, of the Edge Computing and of Proximity Services, known under the ProSe acronym. In particular, V2X applications implicating vehicles are an example of services based on ProSe enabler.

Also, those usages increase the use case for having the Application Function outside of the currently used Public Land Mobile Network, PLMN, which causes specific situations regarding the access to UE's activities using Application Function.

In particular, roaming use cases have been excluded from Rel-17 by lawful interception LI group (3GPP SA3-LI) until a solution is warranty that VPLMN, Visited PLMN, is receiving the appropriate material to ensure LI.

A solution could be to use certificate-based TLS but this solution is not privileged for the applications newly developed. Bootstrapping technologies have real advantages in comparison and there is a need to fulfill Lawful Interception requirements for all deployments scenarios, typically a UE in roaming for those technologies too.

Bootstrapping technologies, typically GBA and AKMA, enable the establishment of keys shared between a UE and an AF. 3GPP does not preclude the AF to be operated outside a visited Public Land Mobile Network, VPLMN. The AF could be operated by the Home Network, HPLMN, or a visited network, or a third party. During 3GPP Rel-17, 3GPP SA3 LI group in charge of Lawful Interceptions raised the following issue.

The shared key in most cases can be used for encryption across the VPLMN by creating an encrypted tunnel between the UE and a point outside the VPLMN, e.g. a point in the Home PLMN, HPLMN, or in third party. This prevents Lawful Interception to take place in the VPLMN as required.

For encryption, which the MNO has been involved in establishing, there is a Lawful Interception requirement to provide either decrypted traffic or the means for law enforcement to decrypt the traffic.

This requirement applies to mechanism such as AKMA where the MNO (Mobile Network Operator) is involved in establishing and distributing key material for encryption. There are thus lawful interception requirements for AKMA and GBA.

Furthermore, when roaming, LI needs to be possible to perform independently in each of the involved jurisdiction, including the ones of the roaming country. In particular, activation of LI in the VPLMN needs to be carried out without explicit support from a HPMLN as it would otherwise lead information that the inbound roamer is a LI target in the VPLMN. In particular, the problem to solve applies to AKMA and GBA.

So far, there is no solution known to address the problem described above. Further alternative and advantageous solutions would, accordingly, be desirable in the art.

### SUMMARY OF THE INVENTION

The present invention aims at enabling the lawful interception, also in roaming situation, for any application using a bootstrapping technology.

The present invention is defined, in its broadest sense, as a method to enable lawful interception of activities of a user equipment UE with an application function AF associated to a bootstrapping technology, the activities using an AF key, while the UE is in a roaming situation with a visited Public Land Mobile Network, VPLMN, using at least one parameter known by both the UE and the VPLMN, the VPLMN having been provided, for lawful interception purposes, with a provided application function key, the method comprising the steps of, respectively, for the UE or for the VPLMN:
- sending the parameter known by both the UE and the VPLMN encrypted with, respectively, the AF key or the provided AF key, to, respectively, the VPLMN or the UE, and
for, respectively, the VPLMN or the UE, which received the encrypted parameter:
- decrypting the encrypted parameter with, respectively, the provided AF key or the AF key, and
- comparing the decrypted parameter with the parameter as known by, respectively, the VPLMN or the UE which received the encrypted parameter,
- authorizing the use of the AF only if the comparison shows that both parameters are the same.

The Lawful Interception possibility of the invention is based on the provision, by the Home PLMN (HPLMN in the following), or by any third party responsible for a given application function AF, of the shared AF key to the visited PLMN. It is here noted that the AF belongs to HPLMN or to a third party. So far, the provisioning of the shared AF key is under the responsibility of the HPLMN only, as the HPLMN is the owner of an anchor function, typically the AAnF for AKMA Anchor Function, where the AF key is derived. However, the invention also applies to situations where such key is provided by the third party which monitors the application function. The invention applies to both cases.

The invention further ensures that the HPLMN, or the third party responsible to provide the application function key, cannot lie to the Visited PLMN (VPLMN in the following) on the shared key value. Otherwise, the provision of the AF key cannot be of any value for the lawful interception requirement.

In bootstrapping technology context, the scenario where the HPLMN could lie to the VPLMN on the value of the shared AF key takes place when the UE is in roaming and that the AF belongs to the HPLMN or to another party.

The invention includes a way, in the case where the AF key is provided systematically to the VPLMN, to check that a correct AF key was provided to fulfil Lawful Interceptions requirements. In other words, the invention enables the VPLMN to verify the AF key as provided by the HPLMN when the UE is in roaming and when the AF is operated by the HPLMN, or by a third party of the VPLMN.

The principle of the invention is thus to make parallel cryptographic operations using the AF key to be verified in order to be able that the provided AF key is correct. It is here thus noted that the terms encrypt/decrypt designate any kind of cryptographic operations enabling to check that a correct AF key was provided by the HPLMN. The calculation of an integrity value of a parameter calculated with the AF key is thus to be considered as an encryption in the meaning of the invention.

Thus, in a specific embodiment, the encrypted parameter is an integrity value of the parameter calculated with, respectively, the AF key or the provided AF key, the decryption step consisting in a calculation with, respectively, the provided AF key or the AF key, of an integrity value of the parameter as known by, respectively, the VPLMN or the UE, which received the encrypted parameter, the comparison step consisting in a comparison of the calculated integrity value with the one as received, the use of the AF being authorized only if the comparison shows that both integrity values are the same.

In this specific embodiment, typically, a Message Authentication Code, MAC, calculated with the AF key is used.

The invention prevents a HPLMN or any PLMN hosting an Application Function implementing a bootstrapping technology and thus an AF key to lie to any other PLMN, typically a VPLMN, on shared keys used between a UE and an AF.

The invention thus relies on the usage of an AF key as provided by the HPLMN, or by another entity associated to the AF, to the VPLMN and of parameter(s) known by the UE and the VPLMN. The invention involves a parameter known by the UE and the VPLMN.

In a preferred embodiment, this parameter is a Generic Universal Temporary Identifier GUTI.

This embodiment uses the main parameter used for the connection of the UE to the VPLMN and is thus a simple and thus preferred embodiment.

The invention enables to check the authenticity of the application function key, in a user equipment roaming context where the user equipment using the application function key is connected to a visited Public Land Mobile Network, VPLMN.

This invention ensures that GBA and AKMA solutions, which besides generally rely on the presence of an USIM, could be used in any deployment scenario where there is interest in securing interfaces thanks to Pre-share key-TLS PSK-TLS.

According to an advantageous feature, an application function identifier to identify the concerned AF is included in exchanges between the UE and the vVPLMN.

Such an AF identifier enables to retrieve the appropriate application function key and to authorize the use of the right verified application function. Such an identifier is a minima associated to the message comprising the encrypted parameter and to the authorization related messages.

According to a particular feature, the UE having a Home Public Land Mobile Network, HPLMN, the provisioning of the application function key is done by the HPLMN.

This situation corresponds to the case where the HPLMN owns the AF but also to cases where the HPLMN centralizes the management of bootstrapping scenarios involving third parties. This is the schema that is most of the time currently implemented when a third party, in the meaning of the 3GPP standardization, is involved in the management of the AF. In such a case, the HPLMN receives necessary key information from such third party for the implementation of the bootstrapping, thus including application function keys.

According to another particular feature of the invention, the bootstrapping technology implementing an Anchor Function in PLMN, the anchor function storing application function keys resulting from bootstrapping technology, the steps as performed by the VPLMN are performed by the Anchor Function of the VPLMN.

This feature corresponds to the simplest implementation of the invention in a VPLMN. The centralization of the bootstrapping necessary material in the anchor function of the VPLMN and performing the steps of the invention within the anchor function is a simple and efficient way to implement the invention.

According to an implementation, the roaming situation using an access management function, the step of, for the entity which encrypts the parameter known by both the UE and the VPLMN, sending the encrypted parameter to the other entity, comprises a sub-step of, for the encrypting entity, to send the encrypted parameter to the access management function which forwards it to the other entity.

This implementation implies the access management function AMF as generally active in roaming situation to be involved in the method of the invention. This is here noted that, when an AF identifier is used, it follows the same way via the AMF.

The invention also concerns a user equipment UE having roaming features with a visited PLMN using a parameter known by both the UE and the visited PLMN and having a duty to enable lawful interception of its activities with an application function AF associated to a bootstrapping technology, the activities using an AF key stored in the UE, the UE comprising:
- an encryption/decryption module adapted to encrypt the parameter known by both the UE and the visited PLMN using the stored AF key and/or to decrypt a received encrypted parameter using the stored AF key,
- a reception/transmission module adapted to send the encrypted parameter to the visited PLMN and/or to receive the encrypted parameter from the visited PLMN,
- a processing module adapted to compare a decrypted parameter with the parameter as known by the UE in the case where the parameter is decrypted, the reception/transmission module being, in this case, further adapted to send the result of the comparison to an access management function for it to authorize the use of the AF only if the comparison shows that both parameters are the same.

Such a user equipment is adapted to the implementation of the method of the invention according to both embodiments of the method, i.e. in the direction from the UE to the visited PLMN or from the visited PLMN to the UE. Of course, these two embodiments can be implemented in one direction for a specific AF and in the other direction for another AF. The two embodiments can coexist or one of them can also be exclusively implemented to perform the method of the invention.

The use of the terms "or" and "and/or" in the claims aims to cover both embodiments together or independently in the definition of the scope of the invention.

The term "respectively" enables to cover the two embodiments in parallel.

The invention also relates to a PLMN adapted to attach a user equipment UE in a roaming situation as a visited Public Land Mobile Network, VPLMN, using a parameter known by both the UE and itself as a VPLMN and adapted to enable lawful interception of activities of the UE with an application function AF associated to a bootstrapping technology the AF being owned by a third party of the PLMN, the activities using an AF key,
the PLMN being adapted to be provided with an application function key,
the PLMN further comprising:
   - an encryption/decryption module adapted to encrypt the parameter using the provided AF key and/or to decrypt a received encrypted parameter using the provided AF key,
   - a reception/transmission module adapted to send the encrypted parameter to the UE and/or to receive the encrypted parameter from the UE,
   - a processing module adapted to compare a decrypted parameter with the parameter as known by the PLMN in the case where the parameter is decrypted by the PLMN, the reception/transmission module being, in this case, further adapted to send the result of the comparison to an access management function for it to authorize the use of the AF only if the comparison shows that both parameters are the same.

Such a PLMN is adapted to perform both embodiments of the method of the invention.

Again, the implementation of only one embodiment without the second one is included in the scope as defined in the claims.

It is here noted that in general and in other parts of the patent application, the terms "third party" designate what it generally designated in 3GPP, i.e. an entity distinct/independent from the operator, this operator being the Home PLMN, HPLMN, or the Visited PLMN, VPLMN. In the above definition of a PLMN of the invention in the last paragraphs, these terms designate, however, all third parties of the PLMN, including, this time, also the HPLMN.

According to an advantageous implementation, the PLMN has a bootstrapping Anchor Function adapted to perform the steps of the method of the invention.

As seen above, this implementation is a simple and efficient way to implement the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows a time flowchart of a first embodiment of the method of the invention,
- Figure 2 shows a time flowchart of a second embodiment of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

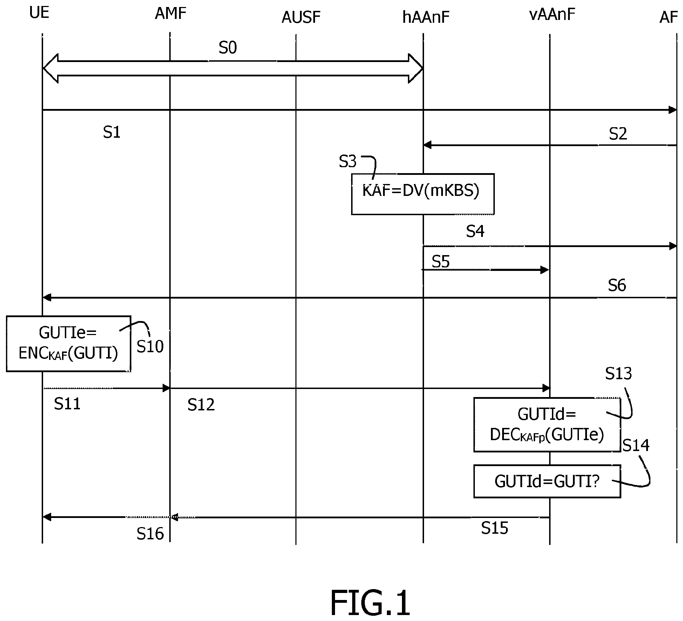

Figure 1 schematically shows a flowchart of a method of the invention. The invention concerns GBA and AKMA as bootstrapping technologies implemented in 5G.

The following illustrative description is done for an AKMA bootstrapping but similar functional entities exist in GBA or in other bootstrapping technologies and the implementation of the invention would be similar.

In this exemplary flowchart, a user equipment UE is in roaming situation with a visited Public Land Mobile Network, VPLMN, having a visited AKMA anchor function vAAnF. While attaching to the VPLMN, the UE has been provided by a Generic Universal Temporary Identifier GUTI.

As a pre-requisite of the invention, the UE was registered and has derived bootstrapping AF keys, in a step S0, for the use of application functions AF using a Bootstrapping technology, typically AKMA-based AF keys for the use of several AF.

This prerequisite can be done before or during the roaming situation as soon as the UE can enter in relation with the AF. For this registration, the UE is in communication with an Access and Mobility Management Function, AMF, in 5G, and with an Authentication Server Function, AUSF.

The registration is done for the use of an Application Function AF managed by the HPLMN of the UE or another entity. In such situation, this can be the anchor function hAAnF of the HPLMN which derives the keys relative to the bootstrapping technology, but the AF key can also be managed and thus provided by any other third party habilitated to manage such AF.

A primary authentication and an establishment of useful keys for the bootstrapping technology is thus performed in the preliminary step S0.

The useful keys, including at least a master bootstrapping key mKBS from which the application function keys will be derived, are then stored in the Anchor Function hAAnF, which belongs here to the HPLMN. It could also be an anchor function belonging to a third party which manages the application function AF. This step in a pre-requisite of the method of the invention.

Then, in a step S1, the UE, while in roaming situation, requests an Application session establishment with the AF. This implies the sending of an AKMA Key identifier of UE A-KID in an AKMA infrastructure. The identifier that would be used in a GBA infrastructure is B-TID.

In a step S2, the AF then sends a request for an application key KAF with A-KID and an AF identifier AF_ID. This request is done to the Anchor Function hAAnF in charge of the management of the AF and with which the UE has previously proceeded to a primary authentication and establishment of a master bootstrapping key mKBS.

In a step S3, the hAAnF derives an application function key KAF from the master bootstrapping key mKBS as previously stored.

Then, in a step S4, the hAAnF answers to the AF while sending at least the key KAF and, advantageously, a key expiration time.

In a step S5, as the hAAnF is informed of the visited PLMN of the UE, the hAAnF also sends the key KAF to the visited Anchor Function vAAnF. The vAAnF is the entity receiving the KAF from the HPLMN of the UE or from the third party which manages the application function. Here it is thus noted that it could be another third party than the hAAnF that would be informed of the visited PLMN of the UE in order to be able to provide the necessary AF key.

Step S4 triggers an answer, in a step S6, of the AF to the UE informing the UE that an application session is established.

In a first embodiment of the invention, after the Application Session establishment response, messages are exchanged in the direction from the UE, in roaming situation, to the AMF, which then communicates with the vAAnF.

In a step S10, the UE encrypts the GUTI with KAF. Alternatively, the UE can also calculate an integrity value of the GUTI with KAF as an encrypted GUTI.

It then sends, in a step S11, the encrypted GUTle to the AMF together with an identifier enabling to retrieve the appropriate KAF in the targeted VAAnF.

In a step S12, the AMF, which knows the GUTI, forwards to the vAAnF both the encrypted GUTle and the GUTI in clear text with the identifier enabling to retrieve the appropriate KAF in the targeted VAAnF.

In a step S13, the vAAnF then deciphers the encrypted GUTle with the KAFp as received from the hAAnF of the HPLMN or from third party that manages the AF. Alternatively, the vAAnF calculates an integrity value GUTId of the GUTI in clear text as received with the KAFp as received from the hAAnF of the HPLMN or from third party that manages the AF.

The deciphered GUTId is compared with the received GUTI in clear text in a step S14. Alternatively, the calculated integrity value GUTId is compared with the received integrity GUTI value.

In a step S15, the vAAnF sends a message to the AMF indicating if the GUTI verification was successful or not, with the identifier enabling to retrieve the appropriate KAF in the UE.

The AMF then sends message to the UE indicating if the GUTI verification was successful or not, as illustrated by a step S16.

The UE then uses the application function AF only in the case the verification was successful.

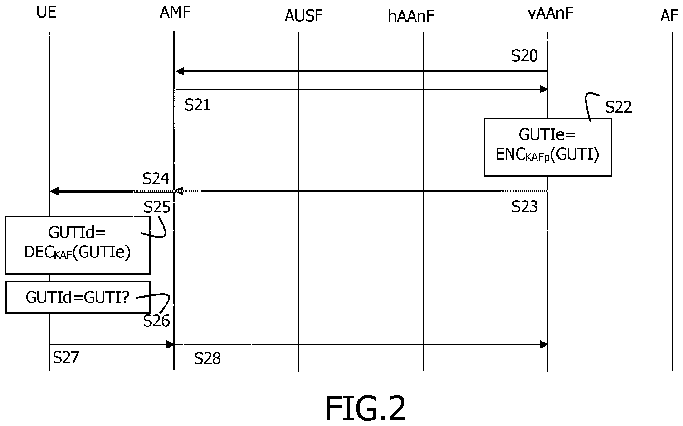

In a second embodiment, shown on figure 2, after the Application Session establishment response of step S6, messages are exchanged from the vAAnF to the AMF, which then forwards them to the UE.

In a first step S20, the vAAnF contacts the AMF to obtain the GUTI in a step S21.

Then, in a step S22, the vAAnF encrypts the GUTI with the key KAFp as received from the hAAnF.

The vAAnF then sends the encrypted GUTle to the AMF in a step S23, together with an identifier enabling to retrieve the appropriate KAF in the UE.

The AMF forwards the encrypted GUTle to the UE in a step S24, together with an identifier enabling to retrieve the appropriate KAF.

In a step S25, the UE decrypts the GUTI with the appropriate key KAF.

The UE then compares the decrypted value GUTId with the GUTI stored in the UE in a step S26.

The UE sends a message to the AMF indicating if the GUTI verification was successful or not, in a step S27.

The AMF then forwards the indication to the vAAnF in a step S28.

The UE uses the application function only if the verification was successful.

With the invention, as soon as the UE is in roaming, the UE checks whether the GUTI verification has been performed while having requested any use of any application function AF. The applicative steps with the AF then take place only if the GUTI verification took place. The solutions apply to any application using bootstrapping technologies, typically AKMA and GBA.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

Specifically, the use of an integrity value as an encrypted value is under the scope of the invention. In this case, the decryption step is indeed a calculation of the integrity value using the AF key without departing from the principles of the invention, which solves the problem of enabling lawful interception for an application by enabling to check that a correct application key was provided. The scope of protection sought for is defined by the appended claims.

## Claims

1. Method to enable lawful interception of activities of a user equipment, UE, with an application function, AF, associated to a bootstrapping technology, said activities using an AF key, while said UE is in a roaming situation with a visited Public Land Mobile Network, PLMN, using at least one parameter known by both said UE and said visited PLMN, said visited PLMN having been provided, for lawful interception purposes, with a said provided application function key, said method comprising the steps of, respectively, for said UE or for said visited PLMN:
- sending (S11, S12, S23, S24) said parameter known by both said UE and said visited PLMN encrypted with, respectively, said AF key or said provided AF key, to, respectively, said visited PLMN or said UE, and
for, respectively, said visited PLMN or said UE, which received the encrypted parameter:
- decrypting (S13, S25) said encrypted parameter with, respectively, said provided AF key or said AF key, and
- comparing (S14, S26) said decrypted parameter with the parameter as known by, respectively, said visited PLMN or said UE which received said encrypted parameter,
- authorizing (S15, S16, S27, S28) the use of said AF only if the comparison shows that both parameters are the same.

2. Method according to claim 1, wherein said parameter known by both said UE and said visited PLMN is a Generic Universal Temporary Identifier, GUTI.

3. Method according to one of preceding claims, wherein an application function identifier to identify the concerned AF is included in exchanges between said UE and said visited PLMN.

4. Method according to one of preceding claims, wherein said UE having a Home Public Land Mobile Network, HPLMN, the provisioning of the application function key is done by said HPLMN.

5. Method according to one of preceding claims, wherein the bootstrapping technology implementing an Anchor Function in PLMN, said anchor function storing application function keys resulting from bootstrapping technology, the steps as performed by said visited PLMN are performed by the Anchor Function of said visited PLMN.

6. Method according to one of preceding claims, wherein the roaming situation using an access management function, the step of, for the entity which encrypts said parameter known by both said UE and said visited PLMN, sending the encrypted parameter to the other entity comprises a sub-step of, for the encrypting entity, to send said encrypted parameter to the access management function which forwards it to the other entity.

7. User equipment, UE, having roaming features with a visited PLMN using a parameter known by both said UE and said visited PLMN and having a duty to enable lawful interception of its activities with an application function AF associated to a bootstrapping technology, said activities using an AF key stored in said UE, said UE comprising:
- an encryption/decryption module adapted to encrypt said parameter known by both said UE and said visited PLMN using the stored AF key and/or to decrypt a received encrypted parameter using said stored AF key,
- a reception/transmission module adapted to send (S11, S12) said encrypted parameter to said visited PLMN and/or to receive (S23, S24) said encrypted parameter from said visited PLMN,
- a processing module adapted to compare (S26) a decrypted parameter with said parameter as known by said UE in the case where said parameter is decrypted, the reception/transmission module being, in this case, further adapted to send (S27, S28) the result of the comparison to an access management function for it to authorize the use of said application function AF only if said comparison shows that both parameters are the same.

8. PLMN adapted to attach a user equipment, UE, in a roaming situation as a visited Public Land Mobile Network, PLMN, using a parameter known by both said UE and itself as a visited PLMN and adapted to enable lawful interception of activities of said UE with an application function, AF, associated to a bootstrapping technology, said AF being owned by a third party of said PLMN, said activities using an AF key,
said PLMN being adapted to be provided with an application function key,
said PLMN further comprising:
- an encryption/decryption module adapted to encrypt (S22) said parameter using the provided AF key and/or to decrypt a received encrypted parameter using said provided AF key,
- a reception/transmission module adapted to send (S23, S24) said encrypted parameter to said UE and/or to receive (S11, S12) said encrypted parameter from said UE,
- a processing module adapted to compare (S14) a decrypted parameter with the parameter as known by said PLMN in the case where said encrypted parameter is decrypted by said PLMN, said reception/transmission module being, in this case, further adapted to send (S15, S16) the result of the comparison to an access management function for it to authorize the use of said AF only if said comparison shows that both parameters are the same.

9. PLMN according to claim 8, said PLMN having a bootstrapping Anchor Function adapted to perform the steps of the method of claims 1 to 6.

## Patentansprüche

1. Verfahren, um eine rechtmäßige Abfangung von Aktivitäten einer Benutzereinrichtung, UE, mit einer Anwendungsfunktion, AF, die einer Bootstrapping-Technologie zugeordnet ist, zu ermöglichen, wobei die Aktivitäten einen AF-Schlüssel verwenden, während sich die UE in einer Roaming-Situation mit einem besuchten öffentlichen landgestützten Mobilfunknetz, PLMN, befindet, unter Verwendung mindestens eines Parameters, der sowohl der UE als auch dem besuchten PLMN bekannt ist, wobei dem besuchten PLMN für Zwecke der rechtmäßigen Abfangung ein bereitgestellter Anwendungsfunktionsschlüssel bereitgestellt wurde, das Verfahren umfassend die Schritte, jeweils für die UE oder für das besuchte PLMN:
- Senden (S11, S12, S23, S24) des Parameters, der sowohl der UE als auch dem besuchten PLMN bekannt ist, verschlüsselt mit jeweils dem AF-Schlüssel oder dem bereitgestellten AF-Schlüssel, an jeweils das besuchte PLMN oder die UE, und
zum, jeweils des besuchten PLMN oder der UE, das/die den verschlüsselten Parameter empfangen hat:
- Entschlüsseln (S13, S25) des verschlüsselten Parameters mit jeweils dem bereitgestellten AF-Schlüssel oder dem AF-Schlüssel, und
- Vergleichen (S14, S26) des entschlüsselten Parameters mit dem Parameter, wie er jeweils dem besuchten PLMN oder der UE, das/die den verschlüsselten Parameter empfangen hat, bekannt ist,
- Autorisieren (S15, S16, S27, S28) der Verwendung der AF nur dann, falls der Vergleich zeigt, dass beide Parameter gleich sind.

2. Verfahren nach Anspruch 1, wobei der Parameter, der sowohl der UE als auch dem besuchten PLMN bekannt ist, ein generische universelle temporäre Kennung, GUTI, ist.

3. Verfahren nach einem der vorstehenden Ansprüche, wobei eine Anwendungsfunktionskennung, um die betreffende AF zu identifizieren, in Austauschvorgängen zwischen der UE und dem besuchten PLMN eingeschlossen ist.

4. Verfahren nach einem der vorhergehenden Ansprüche, wobei die UE ein öffentliches landgestütztes Heimmobilfunknetz, HPLMN, aufweist, wobei das Bereitstellen des Anwendungsfunktionsschlüssels durch das HPLMN erfolgt.

5. Verfahren nach einem der vorstehenden Ansprüche, wobei die Bootstrapping-Technologie eine Ankerfunktion in dem PLMN implementiert, wobei die Ankerfunktion Anwendungsfunktionsschlüssel speichert, die aus der Bootstrapping-Technologie resultieren, wobei die Schritte, wie durch das besuchte PLMN durchgeführt, durch die Ankerfunktion des besuchten PLMN durchgeführt werden.

6. Verfahren nach einem der vorstehenden Ansprüche, wobei die Roaming-Situation eine Zugriffsverwaltungsfunktion verwendet, der Schritt des, für die Entität, die den Parameter verschlüsselt, der sowohl der UE als auch dem besuchten PLMN bekannt ist, Sendens des verschlüsselten Parameters an die andere Entität einen Unterschritt des, für die verschlüsselnde Entität, Sendens des verschlüsselten Parameters an die Zugriffsverwaltungsfunktion umfasst, die ihn an die andere Entität weiterleitet.

7. Benutzereinrichtung, UE, die Roaming-Merkmale mit einem besuchten PLMN unter Verwendung eines Parameters aufweist, der sowohl der UE als auch dem besuchten PLMN bekannt ist, und eine Verpflichtung aufweist, eine rechtmäßige Abfangung ihrer Aktivitäten mit einer Anwendungsfunktion AF zu ermöglichen, die einer Bootstrapping-Technologie zugeordnet ist, wobei die Aktivitäten einen AF-Schlüssel verwenden, der in der UE gespeichert ist, wobei die UE umfasst:
- ein Verschlüsselungs-/Entschlüsselungsmodul, das angepasst ist, um den Parameter, der sowohl der UE als auch dem besuchten PLMN bekannt ist, unter Verwendung des gespeicherten AF-Schlüssels zu verschlüsseln und/oder einen empfangenen verschlüsselten Parameter unter Verwendung des gespeicherten AF-Schlüssels zu entschlüsseln,
- ein Empfangs-/Sendemodul, das angepasst ist, um den verschlüsselten Parameter an das besuchte PLMN zu senden (S11, S12) und/oder den verschlüsselten Parameter von dem besuchten PLMN zu empfangen (S23, S24),
- ein Verarbeitungsmodul, das angepasst ist, um einen entschlüsselten Parameter mit dem Parameter, wie der UE bekannt, zu vergleichen (S26), falls der Parameter entschlüsselt ist, wobei das Empfangs-/Sendemodul in diesem Fall ferner angepasst ist, um das Ergebnis des Vergleichs an eine Zugriffsverwaltungsfunktion zu senden (S27, S28), damit diese die Verwendung der Anwendungsfunktion AF nur dann autorisiert, falls der Vergleich zeigt, dass beide Parameter gleich sind.

8. PLMN, das angepasst ist, um eine Benutzereinrichtung, UE, in einer Roaming-Situation als ein besuchtes öffentliches landgestütztes Mobilfunknetz, PLMN, unter Verwendung eines Parameters anzubinden, der sowohl der UE als auch sich selbst als besuchtes PLMN bekannt ist, und das angepasst ist, um eine rechtmäßige Abfangung von Aktivitäten der UE mit einer Anwendungsfunktion, AF, zu ermöglichen, die einer Bootstrapping-Technologie zugeordnet ist, wobei die AF einem Dritten des PLMN gehört, wobei die Aktivitäten einen AF-Schlüssel verwenden,
wobei das PLMN angepasst ist, um mit einem Anwendungsfunktionsschlüssel versehen zu sein,
das PLMN ferner umfassend:
- ein Verschlüsselungs-/Entschlüsselungsmodul, das angepasst ist, um den Parameter unter Verwendung des bereitgestellten AF-Schlüssels zu verschlüsseln (S22) und/oder einen empfangenen verschlüsselten Parameter unter Verwendung des bereitgestellten AF-Schlüssels zu entschlüsseln,
- ein Empfangs-/Sendemodul, das angepasst ist, um den verschlüsselten Parameter an die UE zu senden (S23, S24) und/oder den verschlüsselten Parameter von der UE zu empfangen (S11, S12),
- ein Verarbeitungsmodul, das angepasst ist, um einen entschlüsselten Parameter mit dem Parameter, wie dem PLMN bekannt, zu vergleichen (S14), falls der verschlüsselte Parameter durch das PLMN entschlüsselt wird, wobei das Empfangs-/Sendemodul in diesem Fall ferner angepasst ist, um das Ergebnis des Vergleichs an eine Zugriffsverwaltungsfunktion zu senden (S15, S16), damit diese die Verwendung der AF nur dann autorisiert, wenn der Vergleich zeigt, dass beide Parameter gleich sind.

9. PLMN nach Anspruch 8, wobei das PLMN eine Bootstrapping-Ankerfunktion aufweist, die angepasst ist, um die Schritte des Verfahrens nach Anspruch 1 bis 6 durchzuführen.

## Revendications

1. Procédé permettant l'interception légale d'activités d'un équipement utilisateur, UE, avec une fonction d'application, AF, associée à une technologie d'amorçage, lesdites activités utilisant une clé AF, tandis que ledit UE est dans une situation d'itinérance avec un réseau mobile terrestre public, PLMN, visité, à l'aide d'au moins un paramètre connu à la fois dudit UE et dudit PLMN visité, ledit PLMN visité ayant été pourvu, à des fins d'interception légale, de ladite clé de fonction d'application fournie, ledit procédé comprenant les étapes consistant à, respectivement, pour ledit UE ou pour ledit PLMN visité :
- envoyer (S11, S12, S23, S24) ledit paramètre connu à la fois dudit UE et dudit PLMN visité chiffré avec, respectivement, ladite clé AF ou ladite clé AF fournie, respectivement, audit PLMN visité ou audit UE, et
pour, respectivement, ledit PLMN visité ou ledit UE, qui a reçu le paramètre chiffré :
- déchiffrer (S13, S25) ledit paramètre chiffré avec, respectivement, ladite clé AF fournie ou ladite clé AF, et
- comparer (S14, S26) ledit paramètre déchiffré avec le paramètre tel que connu, respectivement, dudit PLMN visité ou dudit UE qui a reçu ledit paramètre chiffré,
- n'autoriser (S15, S16, S27, S28) l'utilisation de ladite AF que si la comparaison montre que les deux paramètres sont identiques.

2. Procédé selon la revendication 1, dans lequel ledit paramètre connu à la fois dudit UE et dudit PLMN visité est un identificateur temporaire universel générique, GUTI.

3. Procédé selon l'une des revendications précédentes, dans lequel un identificateur de fonction d'application pour identifier l'AF concernée est inclus dans des échanges entre ledit UE et ledit PLMN visité.

4. Procédé selon l'une des revendications précédentes, dans lequel ledit UE ayant un réseau mobile terrestre public domestique, HPLMN, la fourniture de la clé de fonction d'application est effectuée par ledit HPLMN.

5. Procédé selon l'une des revendications précédentes, dans lequel la technologie d'amorçage mettant en œuvre une fonction d'ancrage dans le PLMN, ladite fonction d'ancrage stockant des clés de fonction d'application résultant de la technologie d'amorçage, les étapes telles que réalisées par ledit PLMN visité sont réalisées par la fonction d'ancrage dudit PLMN visité.

6. Procédé selon l'une des revendications précédentes, dans lequel la situation d'itinérance utilisant une fonction de gestion d'accès, l'étape consistant, pour l'entité qui chiffre ledit paramètre connu à la fois dudit UE et dudit PLMN visité, à envoyer le paramètre chiffré à l'autre entité comprend une sous-étape consistant, pour l'entité de chiffrement, à envoyer ledit paramètre chiffré à la fonction de gestion d'accès qui le transmet à l'autre entité.

7. Équipement utilisateur, UE, ayant des caractéristiques d'itinérance avec un PLMN visité utilisant un paramètre connu à la fois dudit UE et dudit PLMN visité et ayant l'obligation de permettre l'interception légale de ses activités avec une fonction d'application AF associée à une technologie d'amorçage, lesdites activités utilisant une clé AF stockée dans ledit UE, ledit UE comprenant :
- un module de chiffrement/déchiffrement conçu pour chiffrer ledit paramètre connu à la fois dudit UE et dudit PLMN visité à l'aide de la clé AF stockée et/ou pour déchiffrer un paramètre chiffré reçu à l'aide de ladite clé AF stockée,
- un module de réception/transmission conçu pour envoyer (S11, S12) ledit paramètre chiffré audit PLMN visité et/ou pour recevoir (S23, S24) ledit paramètre chiffré à partir dudit PLMN visité,
- un module de traitement conçu pour comparer (S26) un paramètre déchiffré avec ledit paramètre tel que connu dudit UE dans le cas où ledit paramètre est déchiffré, le module de réception/transmission étant, dans ce cas, en outre conçu pour envoyer (S27, S28) le résultat de la comparaison à une fonction de gestion d'accès pour qu'elle autorise l'utilisation de ladite fonction d'application AF uniquement si ladite comparaison montre que les deux paramètres sont identiques.

8. PLMN conçu pour attacher un équipement utilisateur, UE, dans une situation d'itinérance en tant que réseau mobile terrestre public, PLMN, visité, à l'aide d'un paramètre connu à la fois dudit UE et de lui-même en tant que PLMN visité et conçu pour permettre une interception légale d'activités dudit UE avec une fonction d'application, AF, associée à une technologie d'amorçage, ladite AF étant détenue par un tiers dudit PLMN, lesdites activités utilisant une clé AF,
ledit PLMN étant conçu pour être pourvu d'une clé de fonction d'application,
ledit PLMN comprenant en outre :
- un module de chiffrement/déchiffrement conçu pour chiffrer (S22) ledit paramètre à l'aide de la clé AF fournie et/ou pour déchiffrer un paramètre chiffré reçu à l'aide de ladite clé AF fournie,
- un module de réception/transmission conçu pour envoyer (S23, S24) ledit paramètre chiffré audit UE et/ou pour recevoir (S11, S12) ledit paramètre chiffré à partir dudit UE,
- un module de traitement conçu pour comparer (S14) un paramètre déchiffré avec le paramètre tel que connu dudit PLMN dans le cas où ledit paramètre chiffré est déchiffré par ledit PLMN, ledit module de réception/transmission étant, dans ce cas, en outre conçu pour envoyer (S15, S16) le résultat de la comparaison à une fonction de gestion d'accès pour qu'elle n'autorise l'utilisation de ladite AF que si ladite comparaison montre que les deux paramètres sont identiques.

9. PLMN selon la revendication 8, ledit PLMN ayant une fonction d'ancrage d'amorçage conçue pour mettre en œuvre les étapes du procédé selon les revendications 1 à 6.
